# EUROPEAN PATENT APPLICATION

(11) **EP 1 495 909 A2**
(43) Date of publication of application: **12.01.2005**
(21) Application number: 04016031.9
(22) Date of filing: 07.07.2004
(51) Int. Cl.: B60N 2/48

(54) **Headrest for vehicles**

(30) Priority: 08.07.2003 KR 2003046196; 15.06.2004 KR 2004044149
(71) Applicant: Park, Ji-Whan, Seo-Gu, Daejeon (KR)
(72) Inventor: Park, Ji-Whan, Seo-Gu, Daejeon (KR)
(74) Representative: Grünecker, Kinkeldey, Stockmair & Schwanhäusser Anwaltssozietät

(57) **Abstract**

Disclosed herein is a headrest for vehicles, which can fixedly support the passenger's head including the mandible in an automobile crash, thereby preventing hyper-flexion of the neck. The headrest comprises a pair of support rods fitted at the top of a backrest of an automotive vehicle seat, first and second cushion units rotatably fitted at the top of the respective support rods, respectively, at least one elastic member for elastically connecting the first and second cushion units, jaw-restraint portions formed at opposite sides of the first and second cushion units, respectively, and stoppers for keeping the support rods in an immobilized state after the first and second cushion units are rotated to a predetermined degree. By using the headrest of the present invention, it is possible to minimize injury to the neck of the passenger. Especially, the present invention can effectively protect the passenger's neck, which is further endangered when the passenger wears a safety belt, and thus can secure the greatest safety of the passenger.

## Description

### BACKGROUND OF THE INVENTION

### Field of the Invention

The present invention relates to a headrest for vehicles, and more particularly to a headrest for vehicles, which can fixedly support the passenger's head including the mandible in an automobile crash, thereby preventing sprain due to hyper-flexion of the neck.

### Description of the Related Art

In general, an automotive vehicle seat is provided at the top of a backrest with a headrest for supporting the passenger's occiput. Such a headrest serves to relieve shock applied to the occiput in an automobile crash, thereby minimizing injury to the passenger.

However, since headrests are designed to only to support the passenger's occiput, they have a problem in that they cannot provide protection to the neck, in spite of the fact that the neck is an extremely fragile region of the human body, in an automobile crash.

In an automobile crash, such as a broadside, a head-on or rear-end collision, passengers are mostly injured at their neck. The following table represents percentages of injured passengers according to body regions. As can be seen from the table, in years 1998 and 2000, the percentage of passengers, which suffered neck injuries, is the highest, and waist and head injuries follow in order.

| | Year 1998 | Year 2000 | Note |
|---|---|---|---|
| Neck(%) | 62.3% | 69.9% | 7.3% increase |
| Waist(%) | 33.7% | 32.9% | 0.8% reduce |
| Head(%) | 31.0% | 28.0% | 3% reduce |

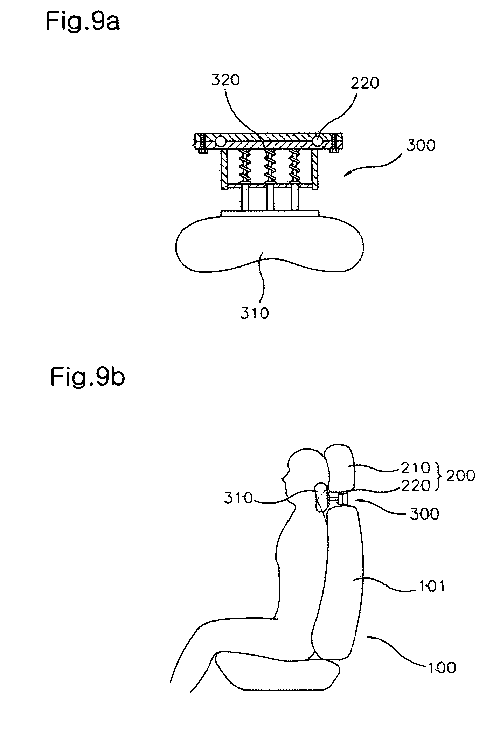

In order to solve the above problem, there have been conventionally developed neck protecting devices, which are designed to elastically support the scruff of the passenger's neck so as to absorb shock generated in an automobile crash. One example of the conventional neck protecting devices is shown in Figs. 9a and 9b, which are, respectively, a plan view and a side view. The device shown is disclosed in Korean Registration Patent Publication No. 302153, titled in "AUXILIARY SUPPORT DEVICE OF HEADREST FOR VEHICLES".

Referring to Figs. 9a and 9b, a headrest 200, installed at the top of a backrest 101 of a conventional automotive vehicle seat 100, comprises a pair of support rods 220 fitted at the top of the backrest 101, and a head cushion 210 fitted at the top of the support rods 220 for supporting the passenger's occipital bone.

Between the head cushion 210 and the backrest 101 an auxiliary support device 300 is provided for supporting the scruff of the neck. The auxiliary support device 300 comprises an air bag 310, and a plurality of springs 320 for elastically supporting the rear surface of the air bag 310.

Although the above described conventional headrest, provided with the auxiliary support device, can relieve shock generated at the moment of an automobile crash by supporting the passenger's occiput as well as the scruff of the neck at the rear side thereof, it cannot prevent hyperflexion of the neck caused as the passenger's head rebounds forward, thereby potentially causing sprain to the passenger' neck. Now explanation is made in detail to such sprain to the neck according to kinds of traffic accidents.

First, in case of a sudden acceleration or rear-end collision of an automotive vehicle, the body of the passenger is moved forward along with the vehicle, but the passenger's head is pushed rearward due to inertia. This results in a successive hyperextension-hyperflexion injury, and consequently sprains the neck. Even in case of a sudden stop or head-on collision of an automotive vehicle in motion, the passenger's head is pushed forward by inertia as the vehicle is momentarily stopped. This similarly results in a successive hyperflexion-hyperextension injury, and consequently sprains the neck.

Such sprain is caused due to the fact that the passenger's head is not stably immobilized so as not to move in an automobile crash. When the passenger wears a safety belt and thus his/her body is stably immobilized, especially, a larger moment is applied to the passenger's neck, resulting in a risk of whiplash due to hyperflexion. Such a risk has awakened us to the urgent need for appropriate measures to safeguard passengers.

### SUMMARY OF THE INVENTION

Therefore, the present invention has been made in view of the above problems, and it is an object of the present invention to provide a headrest for vehicles, which can fixedly support the passenger's head including the mandible in an automobile crash, thereby preventing sprain due to hyperflexion of the neck.

It is another object of the present invention to provide a headrest for vehicles, which is designed to closely support the passenger's occipital bone, thereby allowing shock applied to the occipital bone in an automobile crash to be rapidly distributed, and allowing lessen load of the passenger's head to be transmitted to the backbone.

It is a further object of the present invention to provide a headrest for vehicles, which can automatically immobilize the passenger's head in an automobile crash, such as a broadside, head-on or rear-end collision.

It is yet another object of the present invention to provide a headrest for vehicles, which automatically keeps a constant distance relative to the passenger's head according to the position of the head, and thus enables rapid and accurate support of the passenger's head in an automobile crash.

In accordance with one aspect the present invention, the above and other objects can be accomplished by the provision of a headrest for a vehicle comprising: a pair of support rods fitted at the top of a backrest of an automotive vehicle seat; first and second cushion units rotatably fitted at the top of the respective support rods, respectively; at least one elastic member for elastically connecting the first and second cushion units; jaw-restraint portions formed at opposite sides of the first and second cushion units, respectively; and stoppers for keeping the support rods in an immobilized state after the first and second cushion units are rotated to a predetermined degree.

Preferably, the first and second cushion units include: a pair of symmetrical seating portions, respectively, formed at positions corresponding to the passenger's occipital bone; and a pair of auxiliary cushion members located below the respective seating portions for supporting the bottom of the occipital bone.

In accordance with another aspect the present invention, the above and other objects can be accomplished by the provision of a headrest for a vehicle comprising: first and second cushion units rotatably fitted at the top of a pair of support rods, respectively, the support rods being fitted at the top of a backrest of an automotive vehicle seat, the first and second cushion units having jaw-restraint portions formed at opposite sides thereof, respectively; impact sensors for detecting shock applied to the vehicle in an automobile crash, and outputting signals; pressure sensors for detecting shock caused as the passenger's head collides against the first and second cushion units, and outputting signals; a control unit for receiving the signals from the impact sensor and the pressure sensors, and outputting a control signal for causing rotation of the first and second cushion units; driving units for rotating the first and second cushion units according to the control signal; and stoppers for keeping the first and second cushion units in an immobilized state after they are rotated by a predetermined degree.

In accordance with yet another aspect the present invention, the above and other objects can be accomplished by the provision of a headrest for a vehicle comprising: first and second cushion units rotatably fitted at the top of a pair of support rods, respectively, the support rods being fitted at the top of a backrest of an automotive vehicle seat, the first and second cushion units having jaw-restraint portions formed at opposite sides thereof, respectively; impact sensors for detecting shock applied to the vehicle in an automobile crash, and outputting signals; a distance adjustment unit for maintaining a constant distance between the passenger's head and the first and second cushion units; a control unit for receiving the signals from the impact sensor, and outputting a control signal for causing rotation of the first and second cushion units; driving units for rotating the first and second cushion units according to the control signal; and stoppers for keeping the first and second cushion units in an immobilized state after they are rotated by a predetermined degree.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view illustrating an automotive vehicle seat provided with a headrest in accordance with a first embodiment of the present invention;
Figs. 2a and 2b are a front view and a plan view, respectively, illustrating the headrest shown in Fig. 1;
Fig. 3 is a plan view illustrating the operation of the headrest shown in Fig. 2b;
Fig. 4 is a cross-sectional view illustrating a stopper shown in Fig. 2b;
Fig. 5 is a cross-sectional view illustrating another example of the stopper shown in Fig. 2b;
Fig. 6 is a cross-sectional view illustrating a headrest in accordance with a second embodiment of the present invention;
Fig. 7 is a front sectional view illustrating a driving unit for use in the headrest shown in Fig. 6;
Fig. 8 is a side sectional view illustrating a headrest in accordance with a third embodiment of the present invention; and
Figs. 9a and 9b are a plan view and a side view, respectively, illustrating a headrest of the prior art.

### DESCRIPTION OF THE PREFERRED EMBODIMENTS

Reference will now be made in greater detail to preferred embodiments of the invention, examples of which are illustrated in the accompanying drawings.

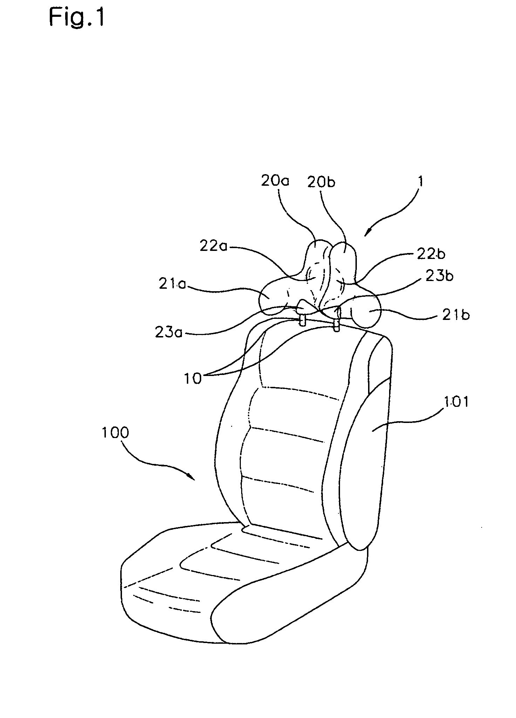

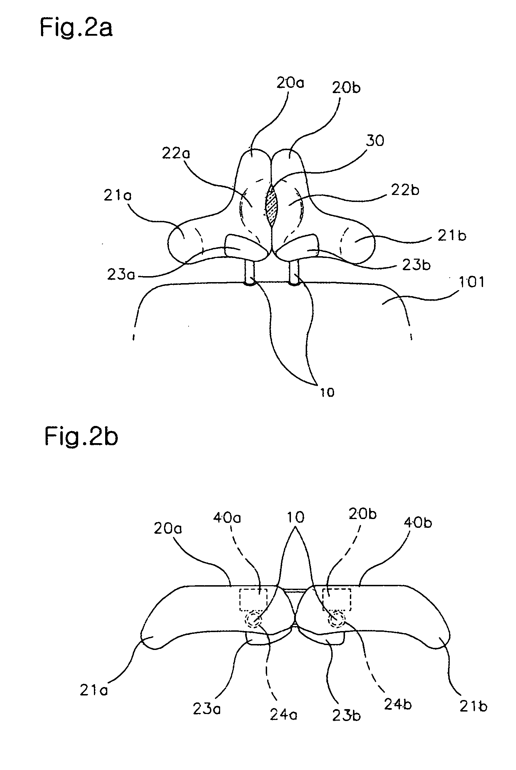

Fig. 1 is a perspective view illustrating an automotive vehicle seat provided with a headrest in accordance with a first embodiment of the present invention. Figs. 2a and 2b are a front view and a plan view, respectively, illustrating the headrest shown in Fig. 1.

As shown in the above drawings, a headrest for vehicles in accordance with a first embodiment of the present invention, which is designated as reference numeral 1, comprises: a pair of support rods 10 fitted at the top of the backrest 101 of the automotive vehicle seat 100; first and second cushion units 20a and 20b rotatably installed at the top of the respective support rods 10; an elastic member 30 for elastically connecting the first and second cushion units 20a and 20b; a jaw-restraint portions 21a and 21b formed at opposite sides of the first and second cushion units 20a and 20b, respectively; and a pair of stoppers 40a and 40b for stopping rotation of the first and second cushion units 20a and 20b after they completely surround the passenger's head.

Within the first and second cushion units 20a and 20b are disposed cylindrical sleeves 24a and 24b, respectively, for use in the insertion of the respective support rods 10. These sleeves 24a and 24b enable the first and second cushion units 20a and 20b to freely rotate about the respective support rods 10.

The jaw-restraint portions 21a and 21b, formed at the opposite sides of the first and second cushion units 20a and 20b, protrude forward so that they can surround the passenger's head including the mandible as the first and second cushion units 20a and 20b rotate about the support rods 10.

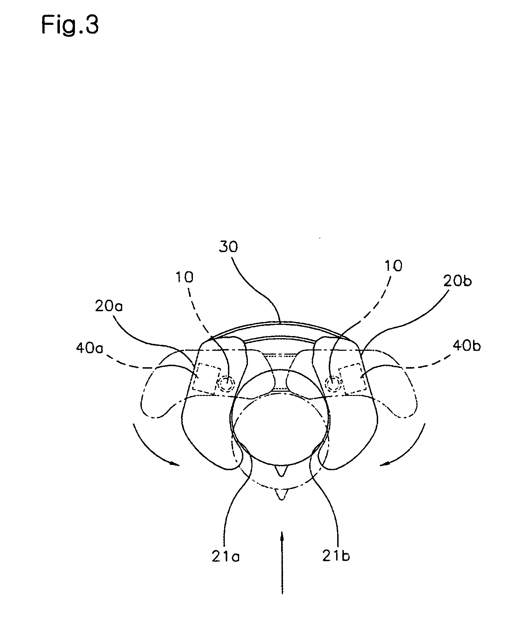

The stoppers 40a and 40b are disposed within the first and second cushion units 20a and 20b. At the moment when the jaw-restraint portions 21a and 21b completely surround the passenger's head, the stoppers 40a and 40b serve to stop rotation of the first and second cushion units 20a and 20b in order to immobilize the passenger's head. Detailed description related to the operation of the stoppers 40a and 40b will follow with reference to Fig. 3.

Meanwhile, at front surfaces of the first and second cushion units 20a and 20b are symmetrically formed concave seating portions 22a and 22b. These concave seating portions 22a and 22b are positioned in correspondence to the passenger's occipital bone, so as to closely support the occipital bone, thereby serving to allowing shock applied to the occipital bone in an automobile crash to be rapidly distributed and thus providing protection to the brain.

Attached at the front surfaces of the first and second cushion units 20a and 20b below the concave seating portions 22a and 22b are auxiliary cushion members 23a and 23b for supporting the bottom of the occipital bone. These auxiliary cushion members 23a and 23b serve to lessen load of the head to be transmitted to the backbone, resulting in a comfortable ride for the passenger.

Preferably, the auxiliary cushion members 23a and 23b are made of memory foam so that they come into close contact with the occipital bone regardless of different occipital bone's shapes in order to multiply the comfort of the ride.

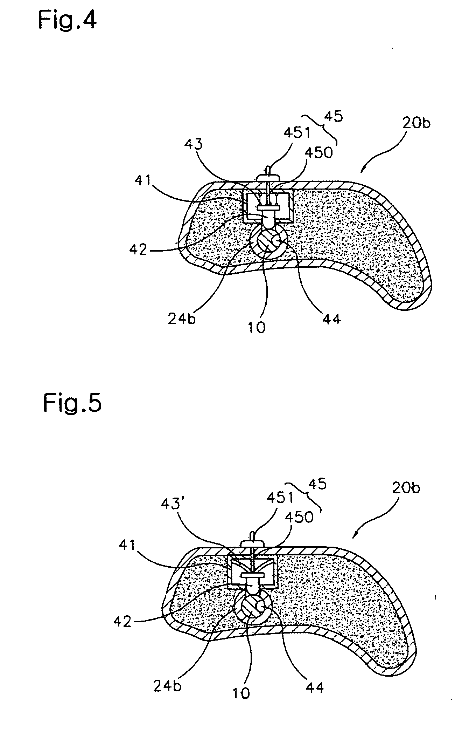

Fig. 3 is a plan view illustrating the operation of the headrest 1 shown in Fig. 2b. Fig. 4 is a cross-sectional view illustrating the stopper 40b shown in Fig. 2b.

As shown in Figs. 3 and 4, when the occiput of the passenger is rapidly moved back in an automobile crash, and collides against the first and second cushion units 20a and 20b, by collision shock applied thereto, the first and second cushion units 20a and 20b are rotated about the support rods 10 so as to surround the passenger's occiput.

Considering the configuration of the stoppers in relation to the second cushion unit 20b as shown in Fig. 4, the stopper 40b comprises: a case 41 provided inside the second cushion unit 20b; the latch 42 protruding at one end thereof out of the case 41 so as to come into contact with the outer periphery of the support rod 10 within the second cushion unit 20b; the spring 43 disposed inside the case 41 so as to elastically support the other end of the latch 42; the fixing groove 44 defined at the outer periphery of the support rod 10 for allowing the latch 42 to be lockably engaged therein as a result of rotation of the second cushion unit 20b; and a pulling member 45 for pulling out the latch 42 inserted in the fixing groove 44.

Therefore, at the moment that the jaw-restraint portions 21a and 21b surround the mandible as a result of rotation of the first and second cushion units 20a and 20b, latches 42 formed at the stoppers 40a and 40b are coincided with fixing grooves 44 defined at the outer periphery of the respective support rods 10, and lockably engaged in the fixing grooves 44 by the elasticity of springs 43, thereby allowing the first and second cushion units 20a and 20b to be fixedly maintained at such a rotated position.

Since the support rods 10 are surrounded by the sleeves 24a and 24b inside the first and second cushion units 20a and 20b, the sleeves 24a and 24b have through-bores (not designated), respectively, for allowing the end of the respective latches 42 to come into contact with the outer periphery of the respective support rods 10 therethrough.

With such a configuration as stated above, shock, which is generated in the course of the collision of the passenger's head against the first and second cushion units 20a and 20b, is exhausted largely by virtue of the elasticity of the elastic member 30, resulting in effective reduction of the shock transmitted to the brain of the passenger.

Further, since the jaw-restraint portions 21a and 21b are immobilized in a state that they completely surround the passenger's head including the mandible, thereby serving to effectively restrict further movement of the head, sprain due to hyperflexion of the neck can be completely prevented.

After the automobile crash, with reference to Fig. 4, the latches 42 are removed from the fixing grooves 44 by means of the pulling members 45, thereby serving to release an immobilized state of the first and second cushion units 20a and 20b. Each of the pulling members 45 has a wire 450, which is connected at one end thereof to the other end of the corresponding latch 42. The other end of the wire 450 protrudes out of the cushion unit. The pulling member 45 further has a pull grip 451 provided at the outwardly-protruded end of the wire 450.

As both the pull grips 451 are simultaneously pulled, the latches 42 are drawn from the fixing grooves 44 by means of the wires 450, thereby allowing the first and second cushion units 20a and 20b to be released from their immobilized state. The released first and second cushion units 20a and 20b are automatically returned to their original positions by the elasticity of the elastic member 30.

Fig. 5 is a cross-sectional view illustrating another example of the stopper shown in Fig. 2b. The shown example is different from the above embodiment in that springs 43', used to elastically support the other end of the respective latches 42 are plate springs rather than coil springs.

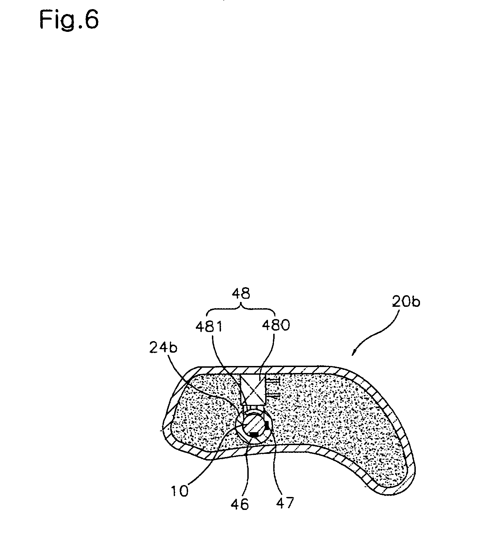

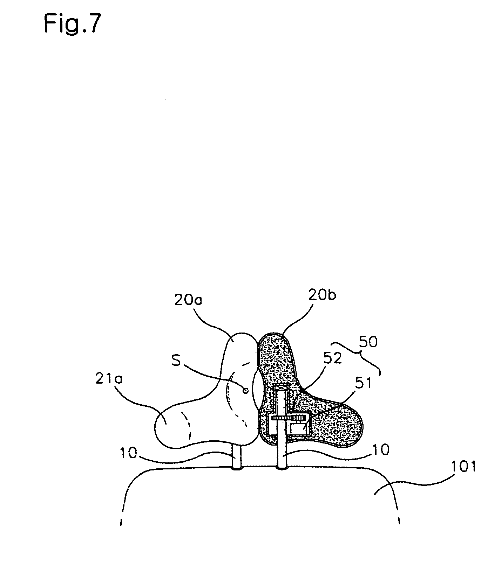

Fig. 6 is a cross-sectional view illustrating a headrest in accordance with a second embodiment of the present invention. Fig. 7 is a front sectional view illustrating a driving unit for use in the headrest shown in Fig. 6.

In an automobile crash, signals from impact sensors (not shown) mounted in an automotive vehicle are inputted into a control unit (not shown). In succession, as the passenger's occiput is rapidly moved back due to such an automobile crash, and collides against the first and second cushion units 20a and 20b, pressure sensors (not shown) disposed inside the first and second cushion units 20a and 20b detect shock applied thereto by the passenger's head, thereby sending signals to the control unit. Upon receiving the above described signals, the control unit outputs a control signal to driving units, so that the first and second cushion units 20a and 20b, and the sleeves 24a and 24b disposed therein are rotated about the support rods 10 according to the operation of the driving units. In this way, the first and second cushion units 20a and 20b are adapted to surround the passenger's head.

The second embodiment employs a pair of stoppers, which are different from those of the first embodiment. Considering now the configuration of the stoppers with reference to Fig. 6, the stopper comprises: a first detector 46 positioned just inside the outer periphery of the support rod 10; a second detector 47 positioned just inside the inner periphery of the sleeve 24b, which surrounds the support rod 10, so as to correspond to the first detector 46; and a locking member 48 adapted to support the lateral surface of the support rod 10 when positions of the first and second detectors 46 and 47 coincide with each other as a result of rotation of the second cushion unit 20b, thereby serving to stop rotation of the second cushion unit 20b and maintaining it in an immobilized state. It will be noted that the above configuration is also applicable to the stopper of the first cushion unit 20a.

Considering the locking members 48 of the stoppers in more detail, they serve to immobilize the first and second cushion units 20a and 20b by making use of a frictional force. Each of the locking members 48 comprises: a hydraulic or pneumatic cylinder 480; a clamp 481 which comes into close contact with the support rod 10 under operation of the cylinder 480 so as to generate a frictional force; and the control unit (not shown) for receiving a signal generated when positions of the first and second detectors 46 and 47 coincide with each other, and sending a driving signal to the cylinder 480.

At the moment when the jaw-restraint portions 21a and 21b surround the passenger's head including the mandible as a result of rotation of the first and second cushion units 20a and 20b, positions of the first and second detectors 46 and 47 coincide with each other, and thus the resultant signal is sent to the control unit. Thereby, the control unit drives the cylinder 480 so that the clamp 481 compresses the lateral surface of the support rod 10, thereby generating a frictional force for immobilizing the first and second cushion units 20a and 20b.

In order to release such an immobilized state of the first and second cushion units 20a and 20b, the cylinder 480 must be driven so as to remove a pressure applied to the clamp 481. Such a pressure removal operation can be easily achieved by installing a separate operator unit (not shown) for inputting a release signal to the control unit.

Referring to Fig. 7 illustrating one of the driving units adapted to be driven by a control signal from the control unit, in relation with the second cushion unit 20b, the driving unit, designated as reference numeral 50, has a servo-motor 51 fixed inside the second cushion unit 20b, and a power-transmission member 52 for transmitting a rotating force of the servo-motor 51 to the support rod 10 inside the second cushion unit 20b.

The power-transmission member 52 transmits the rotating force of the servo-motor 51 to the second cushion unit 20b, thereby allowing the second cushion unit 20b to rotate about the support rod 10. Such a power-transmission member 52 consists of a driving gear (not designated) provided at the servo-motor 51, and a driven gear (not designated) fitted around the support rod 10 so as to engage with the driving gear.

With such a configuration, if the impact sensors detect an automobile crash, and successively, the pressure sensors inside the first and second cushion units 20a and 20b detect shock generated when the passenger's head collides against the first and second cushion units 20a and 20b, the control unit drives the servo-motor 51 so as to rotate the driving gear. As the driving gears rotate around the driven gears fitted to the respective support rods 10, the first and second cushion units 20a and 20b are automatically rotated so as to fixedly support the passenger's head.

In this case, in order to allow the first and second cushion units 20a and 20b to be rapidly rotated, and be stopped in a state wherein they fixedly support the passenger's head, data related to the rotating speed of the servo-motors 51 is inputted to the control unit.

Alternatively, a time required for the backward movement of the passenger's head by inertia in an automobile crash may be previously calculated and stored in the control unit. Thereby, after the control unit detects an automobile crash, the first and second cushion units 20a and 20b are rotated by a predetermined time interval depending on the stored data.

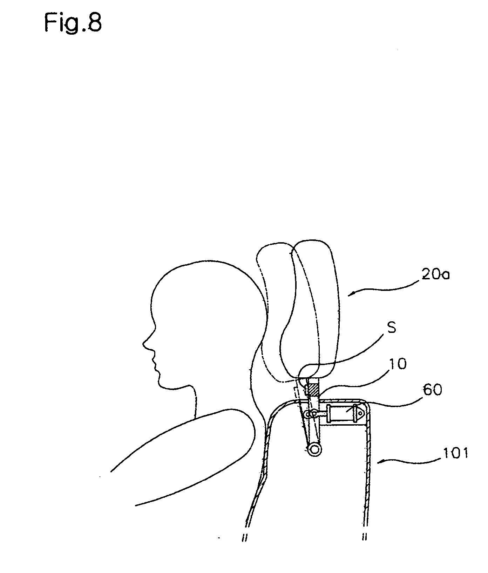

Fig. 8 is a side sectional view illustrating a headrest in accordance with a third embodiment of the present invention. The present embodiment employs a distance adjustment unit for allowing the first and second cushion units 20a and 20b at the top of the backrest 101 to be equally moved toward the passenger's head according to the position of the head. By such a distance adjustment unit, therefore, the first and second cushion units 20a and 20b can closely support the passenger's head.

Some passengers prefer to lean their head on the headrest, whereas others prefer to space their head from the headrest. In the latter case, when a broadside collision occurs, the passenger's head is moved only laterally without colliding with the headrest. This makes it impossible to obtain any protection by the headrest.

In order to solve the above problem, the present embodiment enables the first and second cushion units 20a and 20b to be closely spaced from the passenger's head, thereby allowing the first and second cushion units 20a and 20b to freely rotate regardless of the collision direction of an automotive vehicle. This secures accurate and stable supporting of the passenger's head.

The distance adjustment unit comprises: a distance sensor (S) for detecting a distance between the passenger's occipital bone and the first and second cushion units 20a and 20b, and outputting a corresponding signal; the control unit for detecting the signal from the sensor (S), and outputting a control signal if the detected distance exceeds a predetermined value; and a position adjustor 60 for adjusting positions of the first and second cushion units 20a and 20b according to the control signal. The distance sensor (S) is selected from among conventional photo-sensors, ultrasonic sensors, etc. Such a distance sensor (S) is installed between the support rods 10, and is adapted to measure the distance between the occiput or neck of the passenger and the support rods 10, thereby allowing the distance to be kept in a constant value.

In the present embodiment, as can be seen from Fig. 8, such a distance adjustment is achieved by adjusting an inclination angle of the first and second cushion units 20a and 20b. For this, the support rods 10 are hingedly fixed at their lower ends inside the backrest 101, and the position adjustor 60, which is also fixed inside the backrest 101, serves to allow the first and second cushion units 20a and 20b to be pivotably rotated by a desired angle. As the position adjustor 60 is used a conventional cylinder.

In a state wherein a desired distance value between the first and second cushion units and the passenger's head is previously set in the control unit, only when the distance value detected by the distance sensor (S) exceeds the desired preset value, the control unit is adapted to output a control signal to the position adjustor 60.

As stated above in relation with Fig. 7, the first and second cushion units 20a and 20b are pivotably rotated in an automobile crash so as to fixedly support the passenger's head. In this case, the first and second cushion units 20a and 20b are automatically pivoted corresponding to the position of the passenger's occipital bone, thereby keeping a constant distance relative to the passenger's head. This enables rapid and accurate support of the passenger's head even if the head is moved laterally in case of a broadside collision.

Meanwhile, the present embodiment employs a separate manually-operated switch provided at an automotive vehicle for selectively operating the distance adjustment unit as occasion demands by controlling a power source of the distance adjustment unit. Further, in order to allow positions of the first and second cushion units to be selectively adjusted by the distance adjustment unit only when a passenger rides in the vehicle, the vehicle is provided with a seat sensor for detecting the presence of the passenger on the vehicle seat.

In this case, through the use of the switch for turning on/off the power source of the distance adjustment unit according to a signal from the seat sensor, the first and second cushion units are automatically pivoted in boarding, or automatically stopped in alighting.

The seat sensor serves to confirm the presence of the passenger, and is selectable from among various types of sensors, for example, pressure-sensitive sensors, which are usually installed on a vehicle seat for detecting the weight of the passenger, and sensors, which are usually installed in the vehicle for detecting ignition of the vehicle.

As apparent from the above description, the present invention provides a headrest for vehicles, which can fixedly support the passenger's head including the mandible in an automobile crash, thereby preventing sprain due to hyperflexion of the neck. This has an effect of minimizing injury to the neck of the passenger. Especially, in spite of the fact that the passenger's neck is further endangered when the passenger wears a safety belt, the headrest of the present invention can effectively protect the passenger's neck, and can secure the greatest safety of the passenger.

Further, by forming seating portions at first and second cushion units of the headrest for closely supporting the passenger's occiput, shock applied to the occiput in an automobile crash can be rapidly distributed, resulting in minimization in transmission of the shock to the brain.

In addition to the seating portions, by providing auxiliary cushion members therebelow for supporting the bottom of the occiput, it is possible to allow lessen load of the passenger's head to be transmitted to the backbone, resulting in a more comfortable ride.

According to the present invention, the first and second cushion units may be adapted to automatically support the passenger's head in an automobile crash. This enables more rapid and accurate support of the head and thus results in more successful lifesaving.

Furthermore, according to the present invention, since the first and second cushion units are adapted to automatically keep a constant distance relative to the passenger's head according to position of the head, and thus rapidly support the head, it is possible to protect the passenger's head in an automobile crash regardless of the posture of the passenger or the collision direction of an automotive vehicle.

Finally, as a distance adjustment unit, for adjusting a distance between the first and second cushion units and the passenger's occipital bone, is constructed so as to be automatically turned on/off according to the presence of the passenger without requiring a separate switch manipulation, resulting in simplified control in operation of the first and second cushion units.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A headrest for a vehicle comprising:
a pair of support rods fitted at the top of a backrest of an automotive vehicle seat;
first and second cushion units rotatably fitted at the top of the respective support rods, respectively;
at least one elastic member for elastically connecting the first and second cushion units;
jaw-restraint portions formed at opposite sides of the first and second cushion units, respectively; and
stoppers for keeping the support rods in an immobilized state after the first and second cushion units are rotated to a predetermined degree.

2. The headrest as set forth in claim 1, wherein the first and second cushion units include:
a pair of symmetrical seating portions, respectively, formed at positions corresponding to the passenger's occipital bone; and
a pair of auxiliary cushion members located below the respective seating portions for supporting the bottom of the occipital bone.

3. The headrest as set forth in claim 1 or 2, wherein each of the stoppers includes:
a case provided inside one of the first and second cushion units;
a latch protruding at one end thereof out of the case so as to come into contact with the outer periphery of an associated one of the support rods;
a spring disposed inside the case so as to elastically support the other end of the latch;
a fixing groove defined at the outer periphery of the support rod for allowing the latch to be lockably engaged therein as a result of rotation of the corresponding cushion unit; and
a pulling member for pulling out the latch inserted in the fixing groove.

4. The headrest as set forth in claim 3, wherein the pulling member has:
a wire connected at one end thereof to the other end of the latch, the other end of the wire protruding out of the corresponding cushion unit; and
a pull grip provided at the outwardly-protruded end of the wire.

5. A headrest for a vehicle comprising:
first and second cushion units rotatably fitted at the top of a pair of support rods, respectively, the support rods being fitted at the top of a backrest of an automotive vehicle seat, the first and second cushion units having jaw-restraint portions formed at opposite sides thereof, respectively;
impact sensors for detecting shock applied to the vehicle in an automobile crash, and outputting signals;
pressure sensors for detecting shock caused as the passenger's head collides against the first and second cushion units, and outputting signals;
a control unit for receiving the signals from the impact sensor and the pressure sensors, and outputting a control signal for causing rotation of the first and second cushion units;
driving units for rotating the first and second cushion units according to the control signal; and
stoppers for keeping the first and second cushion units in an immobilized state after they are rotated by a predetermined degree.

6. The headrest as set forth in claim 5, wherein each of the stoppers includes:
a first detector positioned just inside the outer periphery of one of the support rods;
a second detector positioned just inside the inner periphery of a sleeve, which surrounds the support rod, so as to correspond to the first detector; and
a locking member adapted to support the lateral surface of the support rod according to a signal generated when positions of the first and second detectors coincide with each other as a result of rotation of the first and second cushion units.

7. The headrest as set forth in claim 5 or 6, wherein each of the driving units includes:
a servo-motor fixed inside one of the first and second cushion units, and adapted to be driven by the control signal; and
a power-transmission member for transmitting a rotating force of the servo-motor to the support rod.

8. A headrest for a vehicle comprising:
first and second cushion units rotatably fitted at the top of a pair of support rods, respectively, the support rods being fitted at the top of a backrest of an automotive vehicle seat, the first and second cushion units having jaw-restraint portions formed at opposite sides thereof, respectively;
impact sensors for detecting shock applied to the vehicle in an automobile crash, and outputting signals;
a distance adjustment unit for maintaining a constant distance between the passenger's head and the first and second cushion units;
a control unit for receiving the signals from the impact sensor, and outputting a control signal for causing pivotal rotation of the first and second cushion units;
driving units for pivotably rotating the first and second cushion units according to the control signal; and
stoppers for keeping the first and second cushion units in an immobilized state after they are pivotably rotated by a predetermined degree.

9. The headrest as set forth in claim 8, wherein the distance adjustment unit includes:
a distance sensor for detecting a distance between the passenger's occipital bone and the first and second cushion units, and outputting a signal;
the control unit for detecting the signal from the distance sensor, and outputting a control signal if the detected distance exceeds a predetermined value, thereby allowing the first and second cushion units to be spaced apart from the passenger's head by a distance within a range of the predetermined value; and
a position adjustor for adjusting positions of the first and second cushion units according to the control signal from the control unit.

10. The headrest as set forth in claim 8 or 9, wherein the vehicle comprises:
a seat sensor for detecting the presence of the passenger on the seat, and outputting a signal; and
a switch for turning on/off a power source of the distance adjustment unit according to the signal from the seat sensor.
